(19) Europäisches Patentamt
European Patent Office
Office européen des brevets

(11) **EP 1 912 147 A1**

(12) **EUROPEAN PATENT APPLICATION**

(43) Date of publication:
**16.04.2008 Bulletin 2008/16**

(51) Int Cl.:
***G06F 21/00*** *(2006.01)*

(21) Application number: **06122033.1**

(22) Date of filing: **10.10.2006**

| | |
|---|---|
| (84) Designated Contracting States: **AT BE BG CH CY CZ DE DK EE ES FI FR GB GR HU IE IS IT LI LT LU LV MC NL PL PT RO SE SI SK TR** Designated Extension States: **AL BA HR MK RS** | • **Schaefer, Christian 85764 Oberschleißheim (DE)** |
| (71) Applicant: **NTT DoCoMo, Inc. Tokyo (JP)** | (74) Representative: **Betten & Resch Patentanwälte Theatinerstrasse 8 80333 München (DE)** |
| (72) Inventors: • **Kounga, Gina 81245 Muenchen (DE)** | Remarks: Amended claims in accordance with Rule 137(2) EPC. |

(54) **Method and apparatus for selling a digital resource**

(57) A method for selling a digital resource r from a selling node S to a buying node B, said method comprising:

mutually authenticating said first and second nodes without a connection to a fixed network or a trusted third party to verify that the public keys of the first and second nodes are used by legitimate owners;

generating a license to permit the buyer to access said digital resource sold by said seller, said license containing a key;

encrypting said digital resource with the key contained in said license;

sending a message containing said encrypted digital resource together with a signature or a signed hash of said message, the signature being generated using the private key of the seller;

forwarding said license from said seller to said buyer to enable said buyer to use said digital resource.

Fig. 4

EP 1 912 147 A1

**Description**

**FIELD OF INVENTION**

The present invention relates to a method and an apparatus for selling a digital resource, in particular in an ad hoc network.

**BACKGROUND OF THE INVENTION**

Entertainment is a successful business field. Each year music companies sell millions and millions of discs. In order to sell even more copies new distribution systems have been designed. Nowadays, music can be downloaded in mobile networks. This permits music companies to reach millions of potential sellers and buyers. It also permits mobile network operators to 'seduce' more users with new offers of multimedia services. The association between the entertainment and the mobile network business is visible through the evolution of handsets which are not only designed to permit vocal conversation, but also to permit photos to be taken, videos to be filmed and music and videos to be played. Mobile phones are now multimedia players that make music and videos available wherever their owners are. With muiti-hop communications users are able to download videos and music in places where no fixed network may be reachable -like the subway, the trains, etc. However, since multimedia resources are often protected by property rights, their exchange in ad hoc networks will have to be restricted, property rights will have to be obeyed and, eventually, selling of multimedia resources will have to be remunerated. Moreover, buying a resource in an ad hoc network is interesting for users because they can use the resource as soon as they bought it. This raises the need for authentication, authorization, and accounting (AAA) that can permit nodes in ad hoc networks to be sure that accounting evidences generated by communicating parties, that may not be known in advance, are valid. It also raises the need for auditing and charging of resources sold in ad hoc networks.

Ad hoc networks have characteristics that introduce some constraints when one wants to provide AAA. Contrary to fixed networks, they do not operate with a central administration authority and do not rely on an existing infrastructure to ensure proper message delivery or to control network membership. Instead, nodes must cooperate by forwarding messages sent by their neighbors until destinations are reached. But nodes that may come from different organizations may not have any incentive to cooperate with unknown entities.

To stimulate cooperation, approaches have been defined that remunerate cooperative nodes (see. e.g. Kofman and M. Mauve, "Light-Weight Charging and Accounting in Mobile ad-Hoc-Networks," in ACM SIGMOBILE MobiCom 2005 Poster Session, September 2005, or A. Weyland and T. Braun, "Cooperation and Accounting Strategy for Multi-hop Cellular Networks." in 13th IEEE Workshop on Local and Metropolitan Area Networks, April 2004, or P. Hofmann and C. Prehofer, "Gateway-Controlled Accounting for Global Connectivity in Ad Hoc Networks," in First International Conference on Mobile Computing and Ubiquitous Networking (ICMU 2004), January 2004.)

These approaches provide per packet accounting. They are designed for ad hoc networks that are connected to fixed networks or where a central authority is always reachable. However, such connectivity is not always available in ad hoc networks because nodes are free to move so that the connectivity between source and destination nodes can be disrupted at anytime. This can isolate the network and prevent nodes from having a guaranteed access to a trusted third party (TTP). It may prevent nodes from detecting cheating nodes by contacting a central entity. It may also prevent nodes from contacting the provider in order to obtain unexpired certificates that they can use during the initial authentication phase to be identified as cooperative nodes.

To avoid these problems there has been proposed an approach which does not use any third party in the rewarding process but relies on a tamper-resistant hardware module, called security module, that stores public and private keys and guarantees their authenticity (see L. Buttyan and J.-P. Hubaux, "Nuglets: a Virtual Currency to Stimulate Cooperation in Self-Organized Mobile Ad Hoc Networks," Ecole Polytechnique de Lausanne (EPFL), Tech. Rep., 2001).

Another approach described in System for Mobile Ad-Hoc Networks," in Proceedings of IEEE INFOCOM '03, San Francesco, CA, April 2003 does not use any tamper-resistant hardware but a scalable certification authority (CA) such as described in L. Zhou and Z. J. Haas, "Securing Ad Hoc Networks," IEEE Network, vol. 13, no. 6, pp. 24-30, 1999 or in H. Luo, P. Zefros, J. Kong, S. Lu, and L. Zhang, "Self-securing Ad Hoc Wireless Networks," in Seventh IEEE Symposium on Computers and Communications (ISCC '02), 2002. However, Zhou et al. does not guarantee that identities contained in certificates are valid and does not permit to verify that certificates have not been revoked. Luo et al. assumes that each node has a unique nonzero ID, however similarly to Zhou et al., nodes have no means to verify that a claimed identity is really the one owned by a node. This may permit nodes to be issued many certificates with different identities that could be used to receive some credit for some packets they never transmitted.

None of the approaches known so far discloses how authentication is provided in isolated ad hoc networks -i.e. ad hoc networks that do not have any connectivity with a fixed network. Accordingly it is an object of the invention to provide an improved method for selling a digital resource in an ad-hoc network.

## SUMMARY OF THE INVENTION

According to one embodiment there is provided a method for selling a digital resource r in an ad-hoc network from a selling node S to a buying node B, said method comprising:

mutually authenticating said selling and buying nodes without a connection to a fixed network or a trusted third party to verify that the public keys of the first and second nodes are used by legitimate owners;
generating a license to permit the buyer to access said digital resource sold by said seller, said license containing a key;
encrypting said digital resource with the key contained in said license;
sending a message containing said encrypted digital resource and sending a signature or a signed hash of said message, the signature being generated using the private key of the seller;
forwarding said license from said seller to said buyer to enable said buyer to use said digital resource.

The generation of a license in a node of an ad-hoc network and the sending (and storing) of messages which can be used as non-repudiable evidences for the transaction enables the selling of a digital resource even in an ad-hoc network.
The message containing the encrypted digital resource and the signature may be sent together in a single message or in separate messages.

According to one embodiment said method comprises:

when a connection to a trusted accounting authority becomes available, using said message containing the encrypted digital resource together with a signature on said message or a signed hash of said message generated using the private key of the seller as an evidence by said buyer towards a trusted accounting authority that said seller has sold said digital resource, and
performing accounting based on said evidence.

This enables the buyer to submit non-repudiable evidence towards a trusted third party that the seller sold the digital resource to the buyer, and the trusted third party or any accounting entity may carry out an accounting based on said evidence.

According to one embodiment said message containing said encrypted digital resource further comprises the current time and said private key of said seller used for generating said signature or said signed hash is the one that was valid when said message was sent.

The use of a time dependent private key enhances security.

According to one embodiment said license is only sent from said seller to said buyer after said buyer has sent a confirmation message confirming that it wants to buy said digital resource together with a signature on or a signed hash of the confirmation generated using the private key of said buyer.

The confirmation message may be used by the seller as an evidence towards a trusted third party that the buyer intended to buy said digital resource.

According to one embodiment said confirmation message comprises a hash of the encrypted resource and a signature on said confirmation message.

This may be used by the seller as evidence towards a trusted third party that the buyer actually obtained the digital resource, thereby implying that the buyer has bought it.

According to one embodiment said method comprises:

when a connection to said trusted accounting authority becomes available, using said confirmation message from the buyer together with a signature or a signed hash of the confirmation message generated using the private key of said buyer as an evidence by said seller towards said trusted accounting authority that said buyer has bought said digital resource, and performing accounting based on said evidence.

A trusted accounting authority may be any trusted third party capable of performing accounting.

This enables the seller to submit non-repudiable evidence towards a trusted third party.

According to one embodiment the confirmation message contains one or more of the following:

a confirmation statement that the buyer wants to buy said digital resource,
the encrypted digital resource, a hash or a signed hash thereof,
the current time when said confirmation message was sent, and wherein
said private key of said buyer used for generating said signature is the private key which was valid when said confirmation was sent.

The confirmation may indicate (and prove) the intention of the buyer to buy the digital resource. The signature, the hash or signed hash of the encrypted digital resource may be used as evidence that the buyer actually received the digital resource. The use of the current time and of the private key valid at the time when the confirmation message was sent (i.e. the time contained in the confirmation message) enables the use of time dependent keys and enhances security.

According to one embodiment said method comprises authenticating said buying node towards said selling node, said authentication comprising: choosing a secret key s by said buying node and using it to generate a one-way hash chain which is bound to the identity of said buying node through a unique hash-code value contained in said buying node's certificate;

deriving a number of m public/private key pairs, m being an integer, by said buying node using said one-way hash chain of said buying node, said public/private key pairs being bound to one another and to the hash-code value contained in said buying node's certificate;

sending by said buying node one of its generated public keys along with its certificate to said second node;

authenticating said buying node by said selling node by verifying that the disclosed public key is bound to the hash-code contained in said first node's certificate, and

authenticating said setting node towards said buying node in the same manner as said buying node was authenticated towards said selling node.

This provides an authentication scheme which enables authentication to be performed in ad-hoc networks even if no connection to a trusted third party is available at the time of the authentication. The scheme may therefore be used in connection with the selling mechanism for selling digital resources according to embodiments of the invention.

According to one embodiment the public keys are chosen such that in a time interval $T_i$, $0 \leq i \leq m$, said first node uses as private key $K_{m-1-i} = \prod_{j=0}^{m-i-1} f^j(s)$, and as corresponding public key $g^{K_{m-1-i}}$ iwhereas $G=(G,*)$ is a finite cyclic group of order $q$, $g \in G$ is a generator of $G$, and we assume that computing discrete logarithms in $G$ with respect to g is computationally infeasible, and $f$ is a cryptographic (one-way) hash-function mapping the set $\{0,1,...,q-1\}$ onto itself.

This enables to generate public/private key pairs which are time dependent and bound to each other so that the time dependent keys may be used for authentication and also for the generation of non-repudiable evidences.

According to one embodiment the method further comprises an initialization of said buying and selling nodes with a trusted third party, said initialization comprising:

distributing to said buying node $G, f$, m, the trusted third party's public key $K_{TTT}$ and h being a one way hash function;

synchronizing the clocks of said buying and selling nodes with said trusted third party;

and for the node which wishes to prove its identity, calculating a check value according to

$$v = h(g^{\prod_{j=0}^{m} f^j(s)})$$ and a certificate according to $[ID, v, t_0, L]_{K_{TTP}^{-1}}$, whereas *ID* is the identifier of said node, $t_0$ is the issuing time of the certificate, L defines the length time interval for which a public/private key pair is valid, and $[...]_{K_{TTP}^{-1}}$ is the signature generated by the TTP with its private key $K_{TTP}^{-1}$ on the fields of the certificate.

This provides a time dependent authentication scheme whereas the check value may be checked using the time dependent key and the hash chain binding the time dependent keys to each other.

According to one embodiment an authentication of said buying node comprises: in time interval $T_i$, $0 \leq i < m$,

using by said first node as private key $K_{m-1-i} = \prod_{j=0}^{m-i-1} f^j(s)$, and as corresponding public key $g^{K_{m-1-i}}$, to enable said selling node to obtain a verified copy of the public key $g^{K_w}$, sending from said first node to said second node:

$$g^{K_w},$$

$$f^{w+1}(s),$$

the certificate containing $v$, whereas said selling node then computes: $f^j(s)$, $w+1 \leq j \leq m$, and using these values said second node then computes:

$$v^* = \left(g^{K_w}\right)^{\prod_{j=w+1}^{m} f^j(s)}$$

$$= g^{\prod_{j=0}^{w} f^j(s) \prod_{j=w+1}^{m} f^j(s)}$$

$$= g^{\prod_{j=0}^{m} f^j(s)}.$$

and for verifying the identity of said buying node checks that $v = h(v^*)$.

In this manner the check value can be checked against the time dependent key thereby providing evidence that it was sent from the party indicated in the certificate.

According to one embodiment a clock drift is taken into account by defining a maximum clock drift between synchronized clocks and further whether more than one key may be disclosed during authentication to take into account a possible clock drift.

In this manner a possible drift or incomplete synchronization of the clocks of the parties involved can be taken into account,

According to one embodiment at an initialization step a node receives a certificate from a trusted third party or a provider to identify it towards other nodes, said certificate comprising one or more of the following elements:

a user identifier,
a check value,
the issuance time of the certificate,
an identifier of the provider or trusted third party which issued the certificate,
a digital signature of the provider or trusted third party which issued the certificate,
an indication whether the user is allowed to sell/buy multimedia resources.

This enables the system to carry out a sales procedure based on the data certified by the trusted third party during initialization and the boundary conditions defined during the initialization, such as whether the node is allowed at all to sell or buy resources.

According to one embodiment at an initialization step said method comprises to send configuration data from a provider or trusted third party to said user to configure the device of said user to be able to participate in buying or selling multimedia resources said configuration data comprising one or more of the following elements:

the public key of the provider or trusted third party,
the public keys of the other trusted providers,
an indication which accounting information needs to be collected,
the address of network operator's AAA server,
an indication whether the user is allowed to sell/buy multimedia resources,
a limit for buying resources.

In this manner a node participating in the selling/buying procedure may be configured.

According to one embodiment the evidence used by a buyer towards a trusted accounting authority to show that said seller has sold said digital resource comprises one or more of the following elements:

the certificate of the seller;
the seller's public key which was valid when the encrypted resource was sent and the corresponding element of the seller's one-way hash chain that permits to verify the
validity of said seller's public key;
the message MES-Send-Resource containing the current time and the encrypted resource;
the message MES-Send-Hash containing a hash of said message MES-Send-Resource signed with the private key of the seller which was valid when the resource was sent.

In this manner a non-repudiable proof or evidence can be presented by the buyer towards a trusted third party or accounting authority such as a network operator or a similar entity. The trusted accounting authority may be e.g. the network operator or any trusted third party.

According to one embodiment the evidence used by a seller towards a trusted accounting authority to show that said seller has sold said a digital resource comprises one or more of the following elements:

the certificate of the buyer;
the buyer's public key which was valid when the encrypted resource was sent and the corresponding element of the buyer's one-way hash chain that permits to verify the
validity of said buyer's public key ;
a confirmation message MES-Buy--Request comprising the current time, a confirmation statement confirming that the buyer wants to buy the digital resource, a hash of the encrypted resource and the buyer's digital signature on said current time, said confirmation statement and said hash of the encrypted resource composing said MES-Buy--Request generated with the private key of the buyer which was valid when
said confirmation message MES-Buy-Request was sent;
a copy of said MES-Send-Hash message that said seller sent to said buyer and/or a hash of said encrypted digital resource which was sent buy said seller to said buyer.

In this manner a non-repudiable proof or evidence can be presented by the seller towards a trusted third party or accounting authority such as a network operator or a similar entity.

According to one embodiment said evidence further comprises the license for the encrypted digital resource.

This may later be used by the accounting authority or trusted third party for delivering once again the license in case the buyer claims that it has not received it correctly but the buyer being able to provide evidence that he has bough the license.

According to one embodiment there is provided an apparatus for selling a digital resource r in an ad-hoc network from a selling node S to a buying node B, said apparatus comprising:

a module for mutually authenticating said first and second nodes without connecting to a fixed network or a trusted third party to verify that the public keys of the first and
second nodes are used by legitimate owners;
a module for generating a license to permit the buyer to access said digital resource sold by said seller, said license containing a key;
a module for encrypting said digital resource with the key contained in said license;
a module for sending a message containing said encrypted digital resource and a signature or a signed hash of said message, the signature being generated using the private key of the seller;
a module for forwarding said license from said seller to said buyer to enable said buyer to use said digital resource

According to one embodiment there is provided an apparatus comprising one or more modules for carrying out a method according to any of the embodiments of the invention.

According to one embodiment there is provided a computer program for performing authentication in ad hoc networks, said computer program comprising computer program code which when being executed on a computer enable said computer to carry out the method one of the embodiments of the invention.

## DESCRIPTION OF THE DRAWINGS

Fig. 1 schematically illustrates an extension of the coverage of a fixed network through an ad-hoc network.
Fig. 2 schematically illustrates an isolated ad-hoc network.
Fig. 3 schematically illustrates registration process of a node in the fixed network.

Fig. 4 illustrates a process for selling a multimedia resource according to one embodiment of the invention.

Fig. 5 shows the process for the transfer of the accounting data to the operator according to an embodiment of the invention.

Fig. 6 illustrates the assignment of different keys generated with elements of a one-way hash chain to different times according to an embodiment of the invention.

Fig. 7 illustrates how to take into account a clock drift according to an embodiment of the invention.

Fig. 8 illustrates the operation of using evidences according to an embodiment of the invention

**DETAILED DESCRIPTION**

In the following there will be described embodiments which provide AAA when multimedia resources are sold in ad hoc networks. The proposed solution is based on existing AAA architectures with minor extensions for ad hoc networks. In particular there is provided an entity authentication solution that permits nodes to authenticate their communicating parties without having to access any TTP or fixed network. This permits nodes to generate non-repudiable accounting evidences that according to an embodiment can be used, later, by the network operator for billing and charging. However, even if charging is done in the fixed network, according to an embodiment buyers can still play multimedia resources as soon as they bought them in the ad hoc network. This is possible because sellers are able to issue licenses to buyers.

Before describing embodiments of the invention some terms used in the following are briefly explained.

AAA: Authentication, Authorization and Accounting
TTP: Trusted Third Party
DRM: Digital Rights Management
MES: Multimedia resource Exchange System
MNOs: Mobile Network Operators
A4C: Authentication, Authorization, Accounting, Auditing and Charging
SE: Service Equipments
AVPs: Attributes Value Pairs
CRL : Certificate Revocation List
OCSP: Online Certificate Status Protocol

The basic scenario according to one embodiment is that users should be allowed to sell multimedia resources like songs in ad hoc networks. Three entities are involved in the scenario: user, (mobile) network operator and content provider. The user's (mobile) network operator is the entity which is responsible for charging and billing. The user sells some content to another user. The content provider has originally sold the content to the user and owns the rights to the content. When the user sells for example an mp3 file all three entities are involved. The user is distributing the file and according to an embodiment getting a commission for the distribution. The next bill of the user then contains the commission thus reducing the amount he has to pay to the (mobile) network operator. The (mobile) network operator is responsible for the charging and billing with the accounting data received from the user and is charging for this service the content provider. The content provider is getting money for the content sold, reduced by the commission of the user and charging service of the operator, from the (mobile) network operator which has charged the amount to the bill of the content buyer. It is also possible to have only the roles user (seller and buyer) and content provider (now also doing charging and billing).

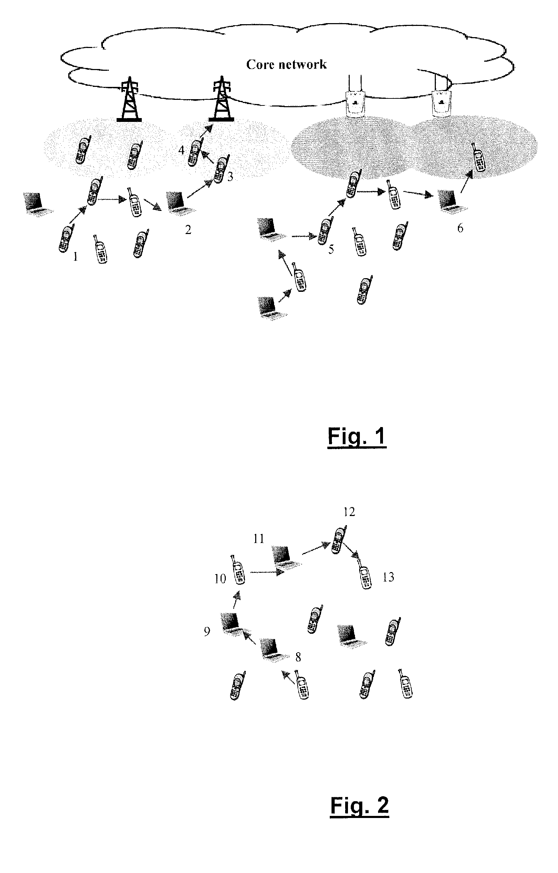

There will be described a solution, applicable to the above described scenario that can be used in any of the ad hoc networks represented in Figures 1 and 2. So the user can either be connected in some way to a fixed network - as shown in Fig. 1 - or he can be without connectivity to a fixed network - as shown in Fig. 2. Without loss of generality one may assume that users are in ad hoc networks that may have no connectivity to any fixed network. There, they can sell multimedia resources and have to generate accounting data themselves that are transferred to their (mobile) network operator when they are connected again to the fixed network (which provides for a connection to the operator's network). Accounting data is generated and verified with users' one time public/private key pairs, whereas each user uses different public/private key pairs for different transactions. The scenario according to one embodiment is based on the assumption that when users register at a network operator they are issued certificates signed by a trusted third party (TTP) situated in the fixed network. Later, they do not need to have any access to the TTP. Furthermore it is assumed that according to one embodiment the user is transferring the file to another user using a multimedia resource exchange system (MES) installed on his device which ensures that the file is transferred reliable and the buyer is charged only if he received the complete file. Some details about such a MES are discussed later in connection with embodiments of the invention. However, it should be noted that the installation of such an MES is optional and just advantageous for implementing embodiments of the invention.

The MES according to one embodiment uses a digital rights management (DRM) system which ensures that only the user with the correct rights is able to use the multimedia resource. The DRM system uses licenses which contain information about how much a resource costs so that a user can sell the resource to another user and requesting the correct price for the resource. The access key to the multimedia resource in the license is protected but details about the protection of the license are defined by the DRM system. Additionally the license specifies if a user is allowed to sell a copy to another user or not. In addition to that the DRM system can generate new licenses out of the existing ones and generate a new wrapper for the multimedia resource so that a user can sell the resource and send a correct license with it. Furthermore the multimedia resource is signed by the content owner so that the user can verify it is indeed the resource he wanted to have.

The MES can be based on plain FTP or HTTP for transferring the resources. The MES receives the multimedia resource and a hash with which it automatically checks if the resource was transferred correctly. Additionally the MES collects accounting data for the AAA system on the device and transfers the collected accounting data to the AAA server. The AAA server is responsible for storing the accounting data and transferring them to another AAA server for example in the network operator's network. The AAA system stores a configuration profile which describes how the AAA system and the MES need to be configured. This configuration profile is protected by the AAA in such a way that it can only be modified by the network operator and it should be readable only to the AAA system on the device.

According to one embodiment the AAA and MES system are implemented in a way that users are not able to tamper with data stored by the systems or how the systems work. Implementing parts of the AAA system and/or MES system on a smart card could increase the tamper resistance of the systems.

According to one embodiment the users have to have a subscription with a network operator for the charging and billing if they want to sell/buy multimedia resources. For the following it is then assumed that the users have a subscription with a (mobile) network operator. Furthermore according to one embodiment the contract governs if the user is allowed to sell and/or buy multimedia resources.

In the following there will now be described the whole process of selling multimedia resources and doing accounting and charging for it according to one embodiment. The process can be divided into three steps which are described in more detail in the following. In the first step, which has to be performed only once, the user has to conclude a contract where it is specified if he is allowed to sell/buy a digital or multimedia resource and all necessary information are provided. The second step describes the actual selling/buying of a multimedia resource. In the last step it is specified how the accounting and charging for the selling of a multimedia resource is working.

In the following the step of registering a (mobile) node according to one embodiment will be described. If a user $U$ wants to buy or to sell some multimedia resources in ad hoc networks he has first to conclude, while he is in the fixed network, a contract with his network operator whether $U$ is allowed to sell and/or buy multimedia resources. The purchase limit of multimedia resources is also specified. This information is stored in a configuration profile for the AAA system of the network operator and is also transferred to $U$'s (mobile) device and stored there. The contract also specifies the share in percentage of each party (user, operator, content owner) involved.

The buyer and seller of multimedia resources have to be able to identify that they are interacting with entities that are registered at a network operator. Moreover, to permit the network operator to remunerate the seller of a resource and to charge the buyer, it is important that buyers and sellers are uniquely identified by the network operator in such a way that the evidences that they have generated in the ad hoc network can be uniquely related to a user's identification information stored in the operator's database. To guarantee that charging and billing will be correctly performed, this identification information must be verified by the network operator when $U$ registers. Once $U$'s identity is verified, the network operator can issue to $U$ a certificate that contains the customer number as unique identifier $ID_U$. Additionally the issued certificate should also contain information indicating whether $U$ is allowed to sell and/or to buy resources in ad hoc networks.

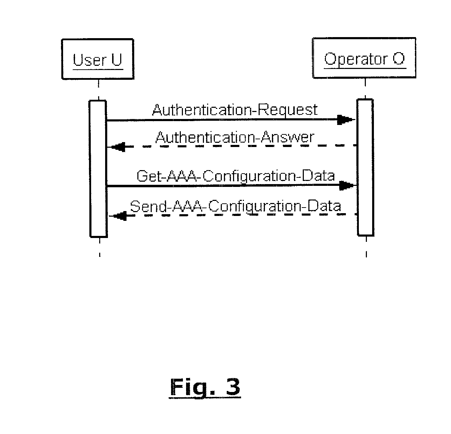

Fig. 3 shows the registration process of the node in the fixed network after $U$ has concluded the contract and/or subscribed to the service for buying multimedia resources.

When $U$ connects to the operator's network he is authorized by the AAA system of his operator (or any trusted third party). After authorization $U$ asks his operator's ($o$) AAA server for the configuration data necessary to configure the AAA system on his device. In reply $o$ sends the configuration data in a secure way to the device which also contains $U$'s certificate. An example of the content of the configuration data according to one embodiment is shown in Table 1. According to one embodiment the provider also sends its public key to $U$ in a secure way to guarantee its authenticity. This can, for instance, be done through imprinting as defined in F. Stajano, "The Resurrecting Duckling - What Next?" in Revised Papers from the 8th International Workshop on Security Protocols or by storing them in the smart card of the mobile device. The provider also sends, in a secure way, the public keys of other providers with which it has an agreement to $U$. These public keys will permit $U$ to recognize, in the ad hoc network, users that are registered at an existing and trusted network operator.

Table 1: Data that compose the certificate issued to the user and the configuration data sent by the provider to user at registration

|  | User Certificate | Configuration data |
|---|---|---|
| **Composition** | • User identifier<br>• User check value<br>• Issuance time of the certificate<br>• Identifier of the provider at which the user subscribed<br>• Digital signature of the provider at which the user subscribed<br>• Is user allowed to sell/buy multimedia resources | • Public key of the provider at which the user subscribed<br>• Public keys of the other trusted providers • Which accounting information<br>needs to be collected • Addresses of network operator's<br>AAA server • Is user allowed to sell/buy multimedia resources • Limit for buying resources |

In the following the step of selling multimedia resources according to one embodiment will be described. When a node has entered an ad hoc network it searches for devices that are preconfigured for exchanging multimedia resources. Thus according to one embodiment the corresponding device needs to have a compatible MES installed as described in the assumptions, and an AAA system.

When the before mentioned requirements are fulfilled it is possible to start the exchange of the multimedia resource. In one embodiment the seller (S) of the multimedia resource is not actively involved in the process as his MES automatically offers the multimedia resources for others he is allowed to sell. The buyer (B) has to select which multimedia resource he wants to buy and confirms after the file transfer that he really wants to buy it.

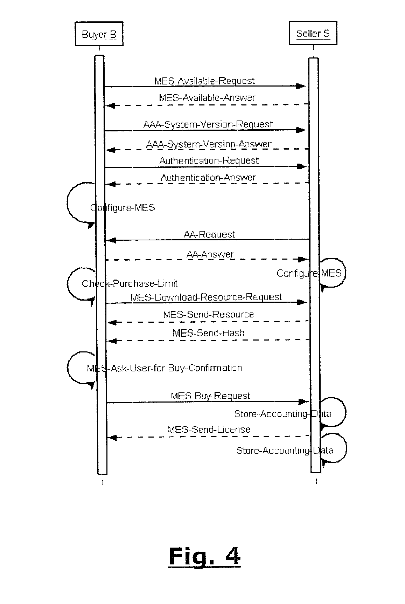

Figure 4 shows an example of a process for selling a multimedia resource according to one embodiment in such an environment. B's device is searching (e.g. by sending a *"MES-Available-Request"*) for other MESs and if it receives a response checks if the MES versions are compatible. In addition to that the list of available resources is also sent by each compatible MES which also contains price information for the multimedia resource. Then B checks if a compatible AAA system is installed on the other device. When the requirements are fulfilled and the list of multimedia resources is available, B can search on his MES for a multimedia resource he would like to buy. After B has found a resource he would like to have and would like to buy from S he starts the buying process. First B authenticates himself with S using the authentication system which will later be described in more detail. Then B's MES is configured (e.g. by a *Configure-MES* request) by the AAA system on the device. The same process is taking place vice versa on S's device so that S is authenticated too as described in the mutual authentication process which will be described later.

After the configuration B selects on his MES the multimedia resource to download and his MES sends a *MES-Download-Resource-Request* to S after it was checked (e.g. by a *Check-Purchase-Limit* request) with the AAA system if the purchase limit was not reached yet. B receives (*MES-Send-Resource*) the multimedia resource protected by the DRM system and a hash of the multimedia resource (*MES-Send-Hash*) so that the multimedia exchange system can check if the resource was downloaded completely. Furthermore the resource is digitally signed so that B can be sure it is from S. After the resource is completely downloaded B is asked (*MES-Ask-User-for-Buy-Confirmation*) if he really wants to buy it. When B agrees a message (*MES-Buy-Request*) is sent back confirming that the resource was received and that B wants to buy the resource. This message according to one embodiment is used as the evidence for S against his operator that some resource was sold, and this evidence is stored *(Store-Accounting-Data)* in the AAA system together with the data of the buyer's identity and the hash of the sent resource. After receiving the buy-confirmation S sends *(MES-Send-License)* B the license for the resource. The license is stored *(store-Accounting-Data)* in the AAA system of S's device.

After the data was sold in this manner, the accounting data has to be transferred to the operator to enable a proper accounting. This will now be described in the following.

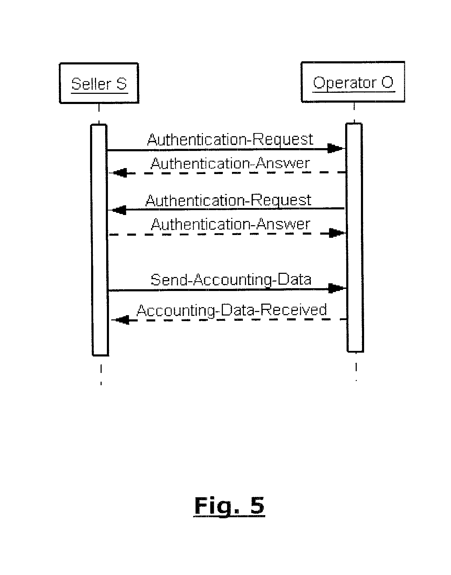

When a seller S has a connection with his operator's network all the collected accounting data can be transferred to his network operator. Fig. 5 shows the process for the transfer of the accounting data to the operator. After the establishment of the connection to the operator's network S has to authenticate (*Authentication-Request/Answer*) himself and the operator authenticates himself against S. In the next step S's AAA system sends *(Send-Accounting-Data)* the accounting data to an AAA server in his operator's network. The reception of the data is confirmed by the AAA server with an *Accounting-Data-Received.* The accounting data according to one embodiment contains what has been sold to whom and the evidence (which according to one embodiment comprises the *MES-Buy-Request* message and the license for the multimedia resource sent to B) for it. The network operator checks the evidences for correctness. He verifies that the buyer is registered in his database or checks with the operator with which the buyer has an agreement.

If these checks were correct, S's network operator checks if he received a copy of the license. He preferably also checks the validity of the confirmation message and the validity of the corresponding signature (which according to one embodiment is based on an authentication scheme which will be described in more detail later). If the accounting data is correct S gets the commission which is reducing his bill. The network operator is charging B for the multimedia resource if B has a subscription with the operator and transfers the money to the content owner reduced by the service charge of the network operator. If B is not subscribed to the S's operator then S's network operator sends the accounting data to B's network operator. B's network operator is then charging and transferring the money for the resource to the content owner.

In the following there will be discussed some possible threats to the proposed process.

A buyer might claim maliciously that he did not receive the license to use the multimedia content and thus does not want to pay for the content. As the network operator gets a copy of the license as part of the evidence for selling the content the network operator can decide if this claim is true or not. If the network operator has a copy of the license the claim is not true and the buyer gets a copy of the license so that he can use the content and will be charged for the purchase. If the network operator does not have a copy of the license then the buyer does not have to pay and he can not use the multimedia resource transferred to his device. Also covered here is the case where the license was sent by the seller but not received by the buyer for example due to network problems.

As the seller only gets money if he transfers all evidences (including the license) to the operator there is no incentive for him not to send the license to the buyer.

The fact that the network operator has a copy of the license also ensures that the buyer only gets charged if he really can use the multimedia resource. If necessary the buyer may ultimately get the license from the operator (e.g. if the transmission from the seller to the buyer failed for some reason, e.g. due to network problems).

In the following there will be described a solution for authentication in ad hoc networks without a central infrastructure according to an embodiment of the invention. This authentication scheme may then be used in connection with the selling/buying process of multimedia resources which has been described before.

According to one embodiment the solutions makes use of one-time valid public keys to provide authentication.

Before describing in detail the proposed scheme, the relevance of authentication is once again briefly revisited. When authorization and accounting has to be provided, authentication permits to identify the principal that must be charged for the consumption of a service. This means that the authentication enables to verify the identity of the other party (the principal) which should be charged. In fixed networks solutions exist that permit to authenticate a principal. However, they mainly rely on a central entity. In ad hoc networks, the lack of infrastructure makes that nodes have no guarantee they can obtain an updated certificate revocation list (CRL), can access an online certificate status protocol (OCSP) responder and access a TTP that permits to evaluate the validity of public key certificates or to distribute secret keys for entity authentication. For these reasons, traditional certificate-based or secret-key-based entity authentication solutions can not be used in their current form to permit nodes in ad hoc networks to authenticate a principal that wants to buy a multimedia resource. This raises the need for entity authentication solutions that do not rely on any central entity.

In the present solution, according to one embodiment any selling node S and buying node B that do not share a secret key in advance and meet for the first time can mutually authenticate and generate one-time public keys without using a public key certificate but by using one-way hash chains. To be authenticated by S, *B* chooses a secret key *s* and uses it to generate a one-way hash chain. That chain is bound to *B*'s identity through a unique hash-code value contained in a certificate. The validity period of the certificate is the time during which the user of B is allowed, by his network provider, to sell, buy or sell and buy resources in ad hoc networks. B uses its chain to derive a number of public/private key pairs. These public/private key pairs are bound to one another and to the hash-code value contained in B's certificate. Then, to be authenticated by S, B just needs to send one of its public keys to S along with its certificate. S can authenticate B by verifying that the disclosed public key is bound to the hash-code contained in B's certificate. Mutual authentication is provided if S sends to B a public key generated as explained previously. These public keys are only valid during the current time interval where the exchange takes place and can only be generated by the legitimate owners of the exchanged certificates.

In the following the initialization of the nodes participating in the scheme according to one embodiment will be described.

Initialization only takes place once, while entities B and S are connected to a fixed network, not necessarily at the same time. It can, for instance, take place when an individual registers at a network operator. At registration, users choose the services to which they need to subscribe. This can be for instance: a service permitting to buy resources, to sell resources or both. B and S contact a TTP in order to synchronize to its clock and in order to obtain the following parameters:

- $G=(G,*)$ is a finite cyclic group of order *q* (for some large *q*), $g \in G$ is a generator of *G*, and we assume that computing discrete logarithms in *G* with respect to *g* is computationally infeasible. For example, *G* might be a large multiplicative subgroup of $Z_p^*$ for some large prime *p*, where *q* is a large prime dividing *p*-1; alternatively *G* could be the group of points on an elliptic curve (usually written additively).

- $h$ is a cryptographic (one way) hash-function mapping arbitrary length binary strings to strings of a fixed length $\ell$ ($\ell$ say, where a typical value for $\ell$ might be 224).
- $f$ is a cryptographic (one-way) hash-function mapping the set $\{0,1,...,q-1\}$ onto itself. In practice, $f$ might, for example, be derived from $h$.
- $m \geq 1$ is a positive integer that determines the number of key pairs available to the node.
- $K_{TTP}$: The TTP's public key.

The TTP sends the same parameters to all the entities that request them. When B receives these parameters, it chooses a secret key $s$ that it securely maintains. This could, for example, be based on a pass-phrase that will permit an access to the secret key only for the brief period during which that secret key needs to be used. This could also be based on a biometric trait -any measurable robust, distinctive physical characteristic or personal trait that can be used to identify, or verify the claimed identity of, an individual (see e.g. E. M. Newton and J. D. Woodward, "Biometrics: A technical primer," RAND, 2001) -that will have to be captured in order to generate that secret key and make it available only for a brief period. Then, B generates the check value:

$$ v = h(g^{\prod_{j=0}^{m} f^{j}(s)}). $$

Once it is done, B sends its identity $ID_B$ and $v$ to the TTP, in order to obtain a certificate that binds these two values. After the TTP has received $ID_B$ and $v$, it verifies that B really owns $ID_B$ and that no certificate was issued which already contains $v$. If all the verifications are correct, then the TTP sends to B the certificate $Cert_B$:

$$ [ID_B, v, t_0, L]_{K_{TTP}^{-1}}. $$

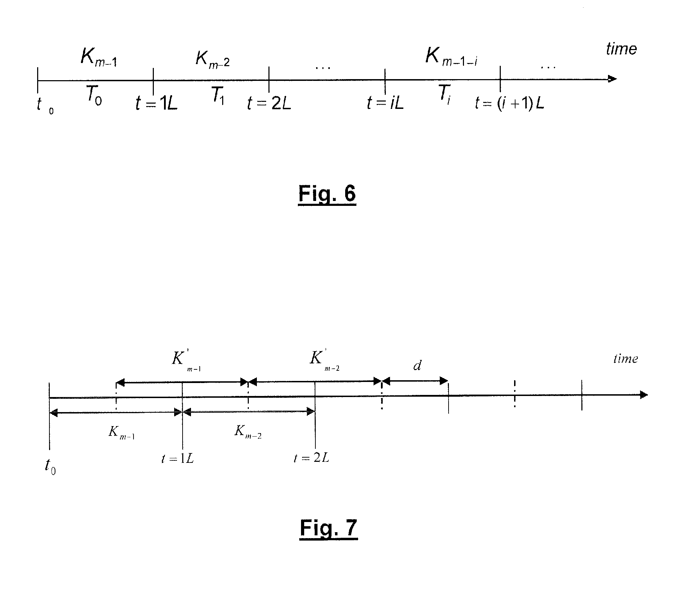

Here, $t_0$ is the issuance time of the certificate, $L$ is an integer and $[\cdots]_{K_{TTP}^{-1}}$ the signature generated by the TTP with its private key $K_{TTP}^{-1}$ on the fields of $Cert_B$. After B has received its certificate, it does not need anymore to access the TTP. B divides time into intervals of equal length $L$. Each interval is assigned a key generated with elements from B's one-way hash chain - see Fig. 6- obtained by repeatedly applying $f$ to $s$. Instead of the issuing time of the certificate any time which can be used as a starting time or reference starting point for defining the time intervals in which a public/private key pair is valid may be used as $t_0$.

Now the actual authentication which may take place after the initialization will be described.

In time interval $T_i$, $0 \leq i < m$, B uses as private key $K_{m-1-i} = \prod_{j=0}^{m-i-1} f^{j}(s)$, and as corresponding

public key $g^{K_{m-1-i}}$. To enable S to obtain a verified copy of the public key $g^{K_w}$ where w is defined by m-1-i and therefore actually by the time interval in which it is generated, B sends S:

- $g^{K_w}$,
- $f^{w+1}(s)$,
- The certificate containing $v$,

When it receives the message, S stores it.
S is assumed to know w (because it is time-dependent) and can then compute $f^{j}(s)$, $w+1 \leq j \leq m$.
Using these values S then computes:

$$v^* = \left(g^{K_w}\right)^{\prod_{j=w+1}^{m} f^j(s)}$$

$$= g^{\prod_{j=0}^{w} f^j(s) \prod_{j=w+1}^{m} f^j(s)}$$

$$= g^{\prod_{j=0}^{m} f^j(s)}.$$

Finally, S checks that $v = h(v^*)$.

If the equality is verified then S knows that $g^{K_w}$ was generated by B whose identity is contained in the received certificate. If S uses the same method as the one used by B previously, then S can prove its identity to B by disclosing the key $g^{K_y}$.

In the following it will be described how according to one embodiment a clock drift can be dealt with.

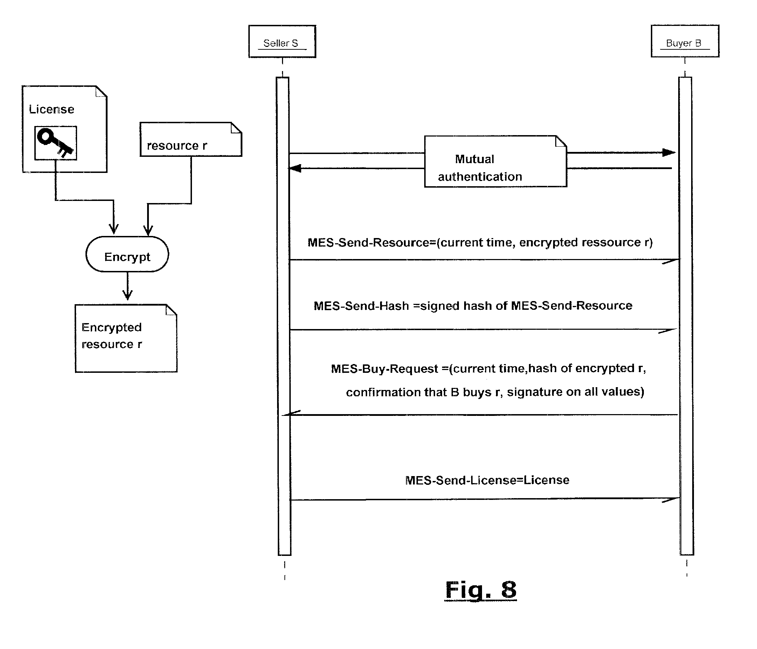

In the described solution, B, S and TTP must have synchronized clocks. Many solutions can be used to achieve such a synchronization, including use of the network time protocol (see e.g. D. Mills. Network Time Protocol (Version 3) Specification, Implementation and Analysis. RFC 1305, March 1992), making B and S become synchronized with the TTP's clock, etc. This is done at the initialization phase, while B and S are connected to the fixed network. However, afterwards they may run independently of the TTP and the fixed network. Synchronization is performed to permit verification of the freshness and the validity of keys published during the authentication process. However, entities do not need to have perfectly synchronized clocks. A clock drift of few seconds may not be a problem if, for instance, two keys are valid during one time period as represented in Figure 7. If $d$ is the maximum clock drift that is tolerated between two entities synchronized with the TTP, then d can be the period of time that separates, in the same time interval, the beginning of the validity period of this two keys. This guarantees that at least one key will permit to perform authentication in each time interval. To illustrate this, consider Figure 7. In the interval $T_0$, $K_{m-1}$ and $K_{m-1}$ are valid, and even if there is a clock drift between B's and the S's clocks, that is less than or equal to $d$, then at least one of the keys will permit verification of the relation $v = h(v^*)$. If more than one key must be disclosed during a time interval, then the TTP can specify it in the certificates. The value of $d$ may be specified by the TTP and sent to entities at the initialization phase.

In the following the security provided by the proposed solution will be discussed.

In the described solution an entity does not need to verify the validity of the certificate by obtaining updated revocation status information. Indeed, if the value s is well protected -this could, for example, be based on a password or pass-phrase, and only stored in the machine for the brief period necessary to generate $K_i$, for some $i$- only B that knows $s$ is able to generate the key $K_{m-i-1}$ valid in interval $T_i$ as well as the corresponding public key $g^{K_{m-1-i}}$. Since $K_{m-i-1}$ is generated with elements of the client's one-way hash chain that have not been published in another time period, and since one-way hash chains are computationally hard to reverse, an attacker is not able to find $K_{m-i-1}$ from keys that the client used in the past. It is also computationally hard for an attacker to find $K_{m-i-1}$ from $g^{K_{m-1-i}}$ (see e.g. W. Diffie and M. E. Hellman, "New Directions in Cryptography," IEEE Transactions on Information Theory, vol. IT-22, no. 6, pp. 644-654, 1976).

Finally, one can note that certain optimizations in the public key verification process are possible if e.g. S caches a trusted copy of a past public key for B.

Now the relevance of the described authentication scheme for accounting will be described.

The present scenario is interesting for users because it can permit them to access to new multimedia resources while they are in the ad hoc network. Therefore, it is important to permit users that have bought some files in ad hoc networks to be able to use them while they are still in ad hoc networks. This requires to define mechanisms that guarantee to selling nodes that they are selling resources to buying nodes that are registered by a valid provider -a provider that exists, that is trusted and that has an agreement with the selling node's network operator. Once this is guaranteed, a selling node will need to have some evidences that it indeed sold a resource r to a node registered at a valid provider. These evidences could be presented later to the network operators for charging. Before the exchange takes place, the seller S and the buyer B run the authentication process that was described previously. If the exchanged proves are valid, then both nodes are sure that they are interacting with the intended entities. They also know that the received public keys are valid and are currently used by their legitimate owners. These public keys can be used to verify non-repudiable proves that a multimedia resource r was sent to B or bought by B. The messages that are exchanged to establish the evidences are represented in Fig. 8.

After mutual authentication is done, S generates a license permitting B to view the multimedia resource r and encrypts r with the corresponding key -contained in that license. Then S generates a message MES-Send-Resource that contains its current time and the encrypted multimedia resource r. Once it is done, S sends MES-Send-Resource and MES-Send-Hash that contains a hash of MES-Send-Resource signed with its currently valid private key to B. If MES-Send-Resource is sent in the same time interval as the one during which mutual authentication takes place, then the hash is signed with the private key associated with the public key that S sent to B in order to authenticate. Otherwise, S must sign the hash with the private key that is valid during the current time interval and must send the corresponding public key along with MES-Send-Resource and MES-Send-Hash to B. S must also send the corresponding element of its one way hash chain in order to permit B to verify the validity of the public key. Whenever a node has to send a new public key, it must also send the corresponding helper. This will be made implicit in the rest of this section. After B has received the message, it can verify that the encrypted multimedia resource was sent by S by checking the validity of the signed hash with S's currently valid public key. If the received message received from S contains a new public key, then B must check its validity before using it to verify the signature. S must also do the same whenever it receives a new public key from B. If the signature is valid, then B stores MES-Send-Resource, MES-Send-Hash and the currently valid public key -if it is different from the one previously received- along with the corresponding element of S's one way hash chain. The stored data is a non-repudiable proof that B can present to the network operator in order to prove that he received r from S. If B wants to buy the received multimedia resource, then he generates a digital signature ---with his currently valid private key--- on: the current time at his clock, the confirmation statement that he wants to buy r and a hash of the encrypted multimedia resource. These values along with the signature compose the message MES-Buy-Request that B sends to S. If the currently valid private key is different from the one that was valid during mutual authentication, then B must send his currently valid public key along with MES-Buy-Request to S. After S has received MES-Buy-Request, he can verify B's signature with B's currently valid public key. If the signature is valid, then S stores MES-Buy-Request and sends the message MES-Send-License to B that contains the license permitting B to decrypt r. The stored data is a non-repudiale proof that S can present to the network operator in order to prove that B confirmed that he wanted to buy the multimedia resource r.

Table 2 shows the evidences stored by S and B.

Table 2. Evidences stored by the seller and the buyer

| | | Seller S | Buyer B |
|---|---|---|---|
| **Evidences stored** | | • B's certificate<br>• B's public key -and the corresponding element of B's one-way hash chain-that was valid when the confirmation was sent.<br>• The hash of the encrypted resource r or the message MES-Send-Hash sent to B<br>• The message MES-Buy-Request that contains:<br><br>   ■ The current time<br>   ■ The confirmation statement that B wants to buy r<br><br>   ■ A hash of the encrypted resource r<br>   ■ B's digital signature generated on the previous values with the private key that was valid when the confirmation was sent<br>• The license for the encrypted resource r | • S's certificate<br>• S's public key -and the corresponding element of S's one-way hash chain- that was valid when the encrypted resource r was sent<br>• The message MES-Send-Resource that contains:<br>   ■ The current time<br>   ■ The encrypted resource r<br><br>• The message MES-Send-Hash that contains a hash of MES-Send-Resource signed with S's private key that was valid when the encrypted resource r was sent |

When the seller is in the fixed network he can prove to the network operator that B bought the resource r by sending the evidences listed in Table 2. The network operator checks that B is registered in its database or checks with the operator with which B has an agreement. If everything is correct the operator uses B's certificate in order to verify that B's public key is the one that was valid when the MES-Buy-Request was sent. The valid public key is used by the operator to verify the validity of the confirmation statement. If it is valid, then the operator verifies B's signature -contained in MES-Buy-Request- with B's public key. The validity of the signature proves to the operator that B confirmed that he wanted to buy the multimedia resource r sent by the seller S.

In the case where B did not receive the license, B can contact the network operatorwhen he is connected to the fixed network--- and can send the network operator the evidences (as shown in Table 2) in order to request the license. The operator verifies that S is registered in its database or in the operator's with which S has a subscription. If S is registered, then the operator verifies that S's public key was valid when the encrypted multimedia resource was sent. If the public key was valid, then the operator verifies that MES-Buy-Hash is also valid by comparing it with the signed hash sent by S. If they are equal, then the network operator knows that the multimedia resource bought by B in the ad hoc network was really sent by S. He searches in its database for the license that S generated and sends it to B.

The following should be noted here.
The solution requires the seller to report to the network operator that it has sold a resource and the content owner -music company, etc.- of that resource is remunerated. As we assume the users can not influence the AAA system the transaction will be reported automatically. However, the seller may be dishonest and may distribute multimedia resources without informing the network provider that it distributed them for example through not connecting his device to a fixed network. This case can not be prevented without increasing the complexity of the overall system. A possible solution, however, might be that the buyer has to check with his operator if the transaction was reported and then the buyer gets a permanent license (the seller is only allowed to issue temporary licenses). With the proposed solution, it is attempted to minimize that dishonest behavior by remunerating the seller. Since the seller is only paid if it reports a transaction to the network provider, it has no financial interest in not reporting transactions.

In the following there will be sketched elements of an AAA architecture that can be used with an embodiment of the invention.

The AAA architecture consists of servers and clients. The servers store all accounting and configuration data and the clients report the metered accounting data to the server. Furthermore the clients can be configured by the servers so that the server can specify what has to be metered and how.

The user's client device according to one embodiment needs to have some AAA server functionality so that accounting can be done partly at the client's side. The AAA server on the client can be an optimized version for speed and size and thus does not need every function of a full blown AAA server. Additionally this AAA server should also be able to act as a client so that the accounting data can be reported to the AAA server in the operator's network. In addition to storing the accounting data until it is reported to the operator the server also stores a configuration profile where information about the selling process of multimedia resources is specified.

The configuration profile describes which data needs to be metered and which data needs to be send to the accounting server of the user's operator when he can send data to the operator's accounting server again. In addition to that the configuration profile contains information for how long the provider guarantees that the profile is correct and if a user is allowed to buy/sell multimedia resources.

As AAA client functionality is integrated in the MES the server is able to configure the MES using its configuration profile and the client reports the metered accounting data to the AAA server on the device.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node or element in a network which is suitably programmed such that it is able to carry out an authentication as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

Embodiments of the invention may be implemented e.g. by nodes in a network or any entities in a network which are programmed to operate in accordance with the authentication mechanisms as described before.


**Claims**

1. A method for selling a digital resource r from a selling node S to a buying node B, said method comprising:

mutually authenticating said selling and buying nodes without a connection to a fixed network or a trusted third party to verify that the public keys of the selling and buying nodes are used by legitimate owners;

generating a license to permit the buyer to access said digital resource sold by said seller, said license containing a key;

encrypting said digital resource with the key contained in said license;

sending a message containing said encrypted digital resource and sending a signature or a signed hash of said message, the signature being generated using the private key of the seller;

forwarding said license from said seller to said buyer to enable said buyer to use said digital resource.

2. The method of claim 1, further comprising:

when a connection to a trusted accounting authority becomes available, using said message containing the encrypted digital resource together with a signature of said message or a signed hash of said message generated using the private key of the seller as an evidence by said buyer towards said trusted accounting authority that said seller has sold said digital resource, and

performing accounting based on said evidence.

3. The method of claim 2, wherein
said message containing said encrypted digital resource further comprises the current time and said private key of said seller used for generating said signature is the one that was valid when said message was sent

4. The method of one of claims 1 to 3, wherein
said license is only sent from said seller to said buyer after said buyer has sent a confirmation message confirming that it wants to buy said digital resource together with a signature or a signed hash of the confirmation generated using the private key of said buyer.

5. The method of claim 4, wherein
said confirmation message comprises a hash of the encrypted resource and a signature or a signed hash on said confirmation message.

6. The method of one of claims 1 to 5,
when a connection to said trusted accounting authority becomes available, using said confirmation message from the buyer together with a signature or a signed hash on said confirmation message generated using the private key of said buyer as an evidence by said seller towards said trusted accounting authority that said buyer has bought said digital resource, and

performing accounting based on said evidence.

7. The method of claim 6, wherein
the confirmation message contains one or more of the following:

a confirmation statement that the buyer wants to buy said digital resource,
the encrypted digital resource, a hash or a signed hash thereof,
the current time,
a signature or signed hash on the previous elements generated with said private key of said buyer which was valid when said confirmation was sent.

8. The method of one of claims 1 to 7, wherein said mutual authentication comprises authenticating said buying node towards said selling node, said authentication comprising:

choosing a secret key s by said buying node and using it to generate a one-way hash chain which is bound to the identity of said buying node through a unique hash-code value contained in said buying node's certificate;
deriving a number of m public/private key pairs, m being an integer, by said buying node using said one-way hash chain of said first buying node, said public/private key pairs being bound to one another and to the hash-code value contained in said buying node's certificate;
sending by said buying node one of its generated public keys along with its certificate to said selling node;
authenticating said buying node by said selling node by verifying that the disclosed public key is bound to the hash-code contained in said buying node's certificate, and
authenticating said selling node towards said buying node in the same manner as said buying node was authenticated towards said selling node.

9. The method of claim 8, wherein the public keys are chosen such that in a time interval $T_i$, $0 \leq i < m$, said first node uses as private key $K_{m-1-i} = \prod_{j=0}^{m-i-1} f^j(s)$, and as corresponding public key $g^{K_{m-1-i}}$, whereas $G=$
$(G,*)$ is a finite cyclic group of order $q$, $g \in G$ is a generator of $G$, and we assume that computing discrete logarithms in $G$ with respect to $g$ is computationally infeasible, and $f$ is a cryptographic (one-way) hash-function mapping the set $\{0,1,...,q-1\}$ onto itself.

10. The method of claim 8 or 9, further comprising an initialization of said buying and selling nodes with a trusted third party, said initialization comprising:

distributing to said buying node $G$, $f$, $m$, the trusted third party's public key $K_{TTP}$ and $h$ being a one way hash function;
synchronizing the clocks of said buying and selling nodes with said trusted third party;

and for the node which wishes to prove its identity, calculating a check value according to

$$v = h(g^{\prod_{j=0}^{m} f^j(s)})$$ and a certificate according to $[ID, v, t_0, L]_{K_{TTP}^{-1}}$, whereas $ID$ is the identifier of said node, $t_0$ is the issuing time of the certificate, L defines the length time interval for which a public/private key pair is valid, and $[...]_{K_{TTP}^{-1}}$ is the signature generated by the TTP with its private key

$K_{TTP}^{-1}$ on the fields of the certificate.

11. The method of claim 10, wherein an authentication of said buying node comprises: in time interval $T_i$, $0 \leq i \leq m$, using

by said buying node as private key $K_{m-1-i} = \prod_{j=0}^{m-i-1} f^j(s)$, and as corresponding public key $g^{K_{m-1-i}}$,

to enable said selling node to obtain a verified copy of the public key $g^{K_w}$, sending from said buying node to said selling node:
$g^{K_w}$,
$f^{w+1}(s)$, the certificate containing $v$, whereas said selling node then computes: $f^j(s)$, $w+1 \leq j \leq m$, and using these values said selling node then computes:

$$v^* = (g^{K_w})^{\prod_{j=w+1}^{m} f^j(s)}$$
$$= g^{\prod_{j=0}^{w} f^j(s) \prod_{j=w+1}^{m} f^j(s)}$$
$$= g^{\prod_{j=0}^{m} f^j(s)}.$$

and for verifying the identity of said buying node checks that $v = h(v^*)$

12. The method of one of claims 8 to 11, wherein
a clock drift is taken into account by defining a maximum clock drift between synchronized clocks and further whether more than one key may be disclosed during authentication to take into account a possible clock drift.

13. The method of one of the preceding claims, wherein at an initialization step a node receives a certificate from a trusted third party or a provider to identify it towards other nodes, said certificate comprising one or some of the following elements:

a user identifier,
an identifier of the provider or trusted third party which issued the certificate,
a digital signature of the provider or trusted third party which issued the certificate,
an issuance time of the certificate,
a user check value,
an indication whether the user is allowed to sell/buy multimedia resources.

14. The method of one of the preceding claims, wherein at an initialization step said method comprises to send configuration data from a network operator or trusted third party to said user to configure the device of said user to be able to participate in buying or selling multimedia resources said configuration data comprises sending one or some of the following pieces of data:

the public key of the network operator or trusted third party,
the public keys of the other trusted network operators or trusted third parties,
an indication which accounting information needs to be collected,
the address of network operator's or trusted third party's AAA server,
an indication whether the user is allowed to sell/buy multimedia resources,
a limit for buying resources.

15. The method of one of the preceding claims, wherein the evidence used by a buyer towards a trusted accounting authority to show that said seller has sold said digital resource comprises one or some of the following elements:

the certificate of the seller;
the seller's public key which was valid when the encrypted resource was sent and the corresponding element of the seller's one-way hash chain;
the message MES-Send-Resource containing the current time and the encrypted resource;
the message MES-Send-Hash containing a hash of said MES-Send-Resource signed with the private key of the seller which was valid when the resource was sent.

16. The method of one the preceding claims, wherein the evidence used by a seller towards a trusted accounting authority to show that said seller has sold said digital resource comprises one or some of the following elements:

the certificate of the buyer;
the hash of the encrypted resource r or the copy of said message MES-Send-Hash ;
the buyer's public key which was valid when the encrypted resource was sent and the corresponding element of the buyer's one-way hash chain permitting to verify the validity of said buyer's public key;
a message MES-Buy-Request comprising the current time, a confirmation statement confirming that the buyer wants to buy the digital resource, a hash of the encrypted resource and the buyer's digital signature on said current time, said confirmation statement and said hash of the encrypted resource generated with the private key which was valid when the confirmation was sent.

17. The method of claim 16, wherein said evidence further comprises the license for the encrypted digital resource.

18. An apparatus for selling a digital resource r from a selling node S to a buying node B, said apparatus comprising:

a module for mutually authenticating said first and second nodes without a connection to a fixed network or a trusted third party to verify that the public keys of the first and second nodes are used by legitimate owners;
a module for generating a license to permit the buyer to access said digital resource sold by said seller, said license containing a key;
a module for encrypting said digital resource with the key contained in said license;
a module for sending a message containing said encrypted digital resource and for sending a signature or a signed hash of said message, the signature being generated using the private key of the seller;
a module for forwarding said license from said seller to said buyer to enable said buyer to use said digital resource.

19. The apparatus of claim 18, further comprising:

a module for performing a method according to one of claims 1 to 17.

**20.** A computer program for performing authentication, said computer program comprising computer program code which when being executed on a computer enable said computer to carry out the method of one of claims 1 to 17.

**Amended claims in accordance with Rule 137(2) EPC.**

**1.** A method for selling a digital resource r from a selling node S to a buying node B, said method comprising:

mutually authenticating said selling and buying nodes without a connection to a fixed network or a trusted third party to verify that the public keys of the selling and buying nodes are used by legitimate owners;
generating a license by said selling node to permit the buyer to access said digital resource sold by said seller, said license containing a key;
encrypting said digital resource with the key contained in said license;
sending a message containing said encrypted digital resource and sending a signature or a signed hash of said message, the signature being generated using the private key of the seller;
forwarding said license from said seller to said buyer to enable said buyer to use said digital resource.

**2.** The method of claim 1, further comprising:

when a connection to a trusted accounting authority becomes available, using said message containing the encrypted digital resource together with a signature of said message or a signed hash of said message generated using the private key of the seller as an evidence by said buyer towards said trusted accounting authority that said seller has sold said digital resource, and
performing accounting based on said evidence.

**3.** The method of claim 2, wherein

said message containing said encrypted digital resource further comprises the current time and said private key of said seller used for generating said signature is the one that was valid when said message was sent

**4.** The method of one of claims 1 to 3, wherein

said license is only sent from said seller to said buyer after said buyer has sent a confirmation message confirming that it wants to buy said digital resource together with a signature or a signed hash of the confirmation generated using the private key of said buyer.

**5.** The method of claim 4, wherein

said confirmation message comprises a hash of the encrypted resource and a signature or a signed hash on said confirmation message.

**6.** The method of one of claims 1 to 5,

when a connection to said trusted accounting authority becomes available, using said confirmation message from the buyer together with a signature or a signed hash on said confirmation message generated using the private key of said buyer as an evidence by said seller towards said trusted accounting authority that said buyer has bought said digital resource, and
performing accounting based on said evidence.

**7.** The method of claim 6, wherein

the confirmation message contains one or more of the following:

a confirmation statement that the buyer wants to buy said digital resource,
the encrypted digital resource, a hash or a signed hash thereof,
the current time,

a signature or signed hash on the previous elements generated with said private key of said buyer which was valid when said confirmation was sent.

**8.** The method of one of claims 1 to 7, wherein said mutual authentication comprises authenticating said buying node towards said selling node, said authentication comprising:

choosing a secret key s by said buying node and using it to generate a one-way hash chain which is bound to the identity of said buying node through a unique hash-code value contained in said buying node's certificate; deriving a number of m public/private key pairs, m being an integer, by said buying node using said one-way hash chain of said first buying node, said public/private key pairs being bound to one another and to the hash-code value contained in said buying node's certificate; sending by said buying node one of its generated public keys along with its certificate to said selling node; authenticating said buying node by said selling node by verifying that the disclosed public key is bound to the hash-code contained in said buying node's certificate, and authenticating said selling node towards said buying node in the same manner as said buying node was authenticated towards said selling node.

**9.** The method of claim 8, wherein the public keys are chosen such that in a time interval $T_i$, $0 \leq i < m,$ said first node uses as private key $K_{m-1-i} = \prod_{j=0}^{m-i-1} f^j(s)$, and as corresponding public key $g^{K_{m-1-i}}$,

whereas $G=(G,*)$ is a finite cyclic group of order $q$, $g \in G$ is a generator of $G$, and we assume that computing discrete logarithms in G with respect to g is computationally infeasible, and $f$ is a cryptographic (one-way) hash-function mapping the set $\{0,1,...,q-1\}$ onto itself.

**10.** The method of claim 8 or 9, further comprising an initialization of said buying and selling nodes with a trusted third party, said initialization comprising:

distributing to said buying node G, $f$, $m$, the trusted third party's public key $K_{TTP}$ and $h$ being a one way hash function; synchronizing the clocks of said buying and selling nodes with said trusted third party;

and for the node which wishes to prove its identity, calculating a check value according to

$$v = h(g^{\prod_{j=0}^{m} f^j(s)})$$ and a certificate according to $[ID, v, t_0, L]_{K_{TTP}^{-1}}$, whereas *ID* is the identifier of said node, $t_0$ is the issuing time of the certificate, L defines the length time interval for which a public/private key pair is valid, and $[...]_{K_{TTP}^{-1}}$ is the signature generated by the TTP with its private key

$K_{TTP}^{-1}$ on the fields of the certificate.

**11.** The method of claim 10, wherein an authentication of said buying node comprises: in time interval $T_i$, $0 \leq i < m$,

using by said buying node as private key $K_{m-1-i} = \prod_{j=0}^{m-i-1} f^j(s)$, and as corresponding public key

$g^{K_{m-1-i}}$, to enable said selling node to obtain a verified copy of the public key $g^{K_w}$, sending from said buying node to said selling node:

$$g^{K_w},$$

$$f^{w+1}(s),$$

the certificate containing $v$, whereas said selling node then computes: $f^j(s)$, $w + 1 \leq j \leq m$, and using these values said selling node then computes:

$$v^* = (g^{K_w})^{\prod_{j=w+1}^{m} f^j(s)}$$
$$= g^{\prod_{j=0}^{w} f^j(s) \prod_{j=w+1}^{m} f^j(s)}$$
$$= g^{\prod_{j=0}^{m} f^j(s)}.$$

and for verifying the identity of said buying node checks that $v = h(v^*)$.

**12.** The method of one of claims 8 to 11, wherein

a clock drift is taken into account by defining a maximum clock drift between synchronized clocks and further whether more than one key may be disclosed during authentication to take into account a possible clock drift.

**13.** The method of one of the preceding claims, wherein at an initialization step a node receives a certificate from a trusted third party or a provider to identify it towards other nodes, said certificate comprising one or some of the following elements:

a user identifier,
an identifier of the provider or trusted third party which issued the certificate,
a digital signature of the provider or trusted third party which issued the certificate,
an issuance time of the certificate,
a user check value,
an indication whether the user is allowed to sell/buy multimedia resources.

**14.** The method of one of the preceding claims, wherein at an initialization step said method comprises to send configuration data from a network operator or trusted third party to said user to configure the device of said user to be able to participate in buying or selling multimedia resources said configuration data comprises sending one or some of the following pieces of data:

the public key of the network operator or trusted third party,
the public keys of the other trusted network operators or trusted third parties,
an indication which accounting information needs to be collected,
the address of network operator's or trusted third party's AAA server,
an indication whether the user is allowed to sell/buy multimedia resources,
a limit for buying resources.

**15.** The method of one of the preceding claims, wherein the evidence used by a buyer towards a trusted accounting authority to show that said seller has sold said digital resource comprises one or some of the following elements:

the certificate of the seller;

the seller's public key which was valid when the encrypted resource was sent and the corresponding element of the seller's one-way hash chain;

the message MES-Send-Resource containing the current time and the encrypted resource;

the message MES-Send-Hash containing a hash of said MES-Send-Resource signed with the private key of the seller which was valid when the resource was sent.

**16.** The method of one the preceding claims, wherein the evidence used by a seller towards a trusted accounting authority to show that said seller has sold said digital resource comprises one or some of the following elements:

the certificate of the buyer;

the hash of the encrypted resource r or the copy of said message MES-Send-Hash ;

the buyer's public key which was valid when the encrypted resource was sent and the corresponding element of the buyer's one-way hash chain permitting to verify the validity of said buyer's public key;

a message MES-Buy-Request comprising the current time, a confirmation statement confirming that the buyer wants to buy the digital resource, a hash of the encrypted resource and the buyer's digital signature on said current time, said confirmation statement and said hash of the encrypted resource generated with the private key which was valid when the confirmation was sent.

**17.** The method of claim 16, wherein said evidence further comprises the license for the encrypted digital resource.

**18.** An apparatus for selling a digital resource r from a selling node S to a buying node B, said apparatus comprising:

a module for mutually authenticating said first and second nodes without a connection to a fixed network or a trusted third party to verify that the public keys of the first and second nodes are used by legitimate owners;

a module for generating a license to permit the buyer to access said digital resource sold by said seller, said license containing a key;

a module for encrypting said digital resource with the key contained in said license;

a module for sending a message containing said encrypted digital resource and for sending a signature or a signed hash of said message, the signature being generated using the private key of the seller;

a module for forwarding said license from said seller to said buyer to enable said buyer to use said digital resource.

**19.** The apparatus of claim 18, further comprising:

a module for performing a method according to one of claims 1 to 17.

**20.** A computer program for performing authentication, said computer program comprising computer program code which when being executed on a computer enable said computer to carry out the method of one of claims 1 to 17.

**Fig. 1**

**Fig. 2**

**Fig. 3**

User U → Operator Q:
- Authentication-Request
- Authentication-Answer
- Get-AAA-Configuration-Data
- Send-AAA-Configuration-Data

**Fig. 4**

**Fig. 5**

**Fig. 6**

**Fig. 7**

Fig. 8

**European Patent Office**

## EUROPEAN SEARCH REPORT

Application Number

EP 06 12 2033

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 1 693 731 A (NOKIA CORP [FI])<br>23 August 2006 (2006-08-23)<br>* paragraphs [0195] - [0197], [0213] -<br>[0234] *<br>----- | 1,4,5,<br>18-20<br><br>2,3,6-17 | INV.<br>G06F21/00 |
| X | CHEUN NGEN CHONG ET AL: "License Transfer in OMA-DRM"<br>COMPUTER SECURITY - ESORICS 2006 LECTURE NOTES IN COMPUTER SCIENCE;;LNCS, SPRINGER BERLIN HEIDELBERG, BE,<br>vol. 4189, 21 September 2006 (2006-09-21),<br>- 20 September 2006 (2006-09-20) pages 81-96, XP019043224<br>ISBN: 978-3-540-44601-9<br>* pages 83,86 *<br>----- | 1,4,5,<br>18-20 | |
| Y | SCHNEIER B: "AUTHENTICATION"<br>APPLIED CRYPTOGRAPHY. PROTOCOLS, ALGORITHMS, AND SOURCE CODE IN C, NEW YORK, JOHN WILEY & SONS, US, 1996, pages 52-65,178, XP002908685<br>ISBN: 0-471-11709-9<br>* page 53 *<br>----- | 8-12 | |
| Y | WO 2004/032416 A (LAB FOR INFORMATION TECHNOLOGY [SG]; ZHOU JIANYING [SG]; BAO FENG [SG]) 15 April 2004 (2004-04-15)<br>* page 1, lines 16-19 *<br>* page 15, lines 4-9 *<br>----- | 8-12 | |
| Y | US 2005/283444 A1 (EKBERG JAN-ERIK [FI])<br>22 December 2005 (2005-12-22)<br>* abstract; figure 1 *<br>* paragraphs [0015], [0033] *<br>----- | 2,3,6,7,<br>13-17 | |
| Y | EP 1 519 332 A (AT & T CORP [US])<br>30 March 2005 (2005-03-30)<br>* paragraphs [0034] - [0037] *<br>----- | 13-17 | |

TECHNICAL FIELDS
SEARCHED (IPC)

G06F
H04L

The present search report has been drawn up for all claims

| Place of search | Date of completion of the search | Examiner |
|---|---|---|
| Munich | 17 July 2007 | KERSCHBAUMER, J |

EPO FORM 1503 03.82 (P04C01)

European Patent

Office

---

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

| | | |
|---|---|---|
| **European Patent Office** | **LACK OF UNITY OF INVENTION SHEET B** | Application Number<br>EP 06 12 2033 |

The Search Division considers that the present European patent application does not comply with the requirements of unity of invention and relates to several inventions or groups of inventions, namely:

```
1. claims: 1, 4-5, 18-20

        selling a digital resource without connecting to a trusted
        third party;
        using a confirmation message
                        ---

2. claims: 8-12

        selling a digital resource without connecting to a trusted
        third party;
        mutual authentication using public and private keys in
        special time frames
                        ---

3. claims: 2-3, 6-7, 13-17

        selling a digital resource without connecting to a trusted
        third party;
        contacting to a third party before and afterwards
                        ---
```

**EP 1 912 147 A1**

## ANNEX TO THE EUROPEAN SEARCH REPORT
## ON EUROPEAN PATENT APPLICATION NO.

EP 06 12 2033

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2007

| Patent document cited in search report | | Publication date | Patent family member(s) | | Publication date |
|---|---|---|---|---|---|
| EP 1693731 | A | 23-08-2006 | NONE | | |
| WO 2004032416 | A | 15-04-2004 | AU | 2002330834 A1 | 23-04-2004 |
| US 2005283444 | A1 | 22-12-2005 | CN | 1969291 A | 23-05-2007 |
| | | | EP | 1769419 A2 | 04-04-2007 |
| | | | WO | 2006000864 A2 | 05-01-2006 |
| EP 1519332 | A | 30-03-2005 | CA | 2482206 A1 | 26-03-2005 |
| | | | US | 2005067483 A1 | 31-03-2005 |

EPO FORM P0459

For more details about this annex : see Official Journal of the European Patent Office, No. 12/82

31

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **KOFMAN ; M. MAUVE.** Light-Weight Charging and Accounting in Mobile ad-Hoc-Networks. *ACM SIGMOBILE MobiCom 2005 Poster Session,* September 2005
- **A. WEYLAND ; T. BRAUN.** Cooperation and Accounting Strategy for Multi-hop Cellular Networks. *13th IEEE Workshop on Local and Metropolitan Area Networks,* April 2004
- **P. HOFMANN ; C. PREHOFER.** Gateway-Controlled Accounting for Global Connectivity in Ad Hoc Networks. *First International Conference on Mobile Computing and Ubiquitous Networking (ICMU 2004,* January 2004
- **L. BUTTYAN ; J.-P. HUBAUX.** Nuglets: a Virtual Currency to Stimulate Cooperation in Self-Organized Mobile Ad Hoc Networks. *Ecole Polytechnique de Lausanne (EPFL), Tech. Rep,* 2001
- System for Mobile Ad-Hoc Networks. *Proceedings of IEEE INFOCOM '03,* April 2003

- **L. ZHOU ; Z. J. HAAS.** Securing Ad Hoc Networks. *IEEE Network,* 1999, vol. 13 (6), 24-30
- **H. LUO ; P. ZEFROS ; J. KONG ; S. LU ; L. ZHANG.** Self-securing Ad Hoc Wireless Networks. *Seventh IEEE Symposium on Computers and Communications (ISCC '02,* 2002
- **F. STAJANO.** The Resurrecting Duckling - What Next. *8th International Workshop on Security Protocols*
- **E. M. NEWTON ; J. D. WOODWARD.** Biometrics: A technical primer. *RAND,* 2001
- **D. MILLS.** Network Time Protocol (Version 3) Specification, Implementation and Analysis. *RFC 1305,* March 1992
- **W. DIFFIE ; M. E. HELLMAN.** New Directions in Cryptography. *IEEE Transactions on Information Theory,* 1976, vol. IT-22 (6), 644-654